(19) **Europäisches Patentamt / European Patent Office / Office européen des brevets**

(11) **EP 4 668 595 A1**

(12) # EUROPEAN PATENT APPLICATION

(43) Date of publication:
**24.12.2025  Bulletin 2025/52**

(21) Application number: **25163554.6**

(22) Date of filing: **13.03.2025**

(51) International Patent Classification (IPC):
**H04B 7/04** $^{(2017.01)}$        **H04B 7/06** $^{(2006.01)}$
**H04L 25/02** $^{(2006.01)}$

(52) Cooperative Patent Classification (CPC):
**H04B 7/04013; H04B 7/0634; H04L 25/0248**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2024  IN 202421019098**

(71) Applicant: **Tata Consultancy Services Limited
Maharashtra (IN)**

(72) Inventors:
• **SAMPANGI, Jayanth
560066 Bengaluru, Karnataka (IN)**

• **GORTY, Venkata Vishnu Karthikeya
560066 Bangaluru, Karnataka (IN)**
• **KUMAR, Achanna Anil
560066 Bengaluru, Karnataka (IN)**
• **CHAKRAVARTY, Tapas
700135 Kolkata, West Bengal (IN)**
• **PAL, Arpan
700135 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR CHANNEL ESTIMATION IN RECONFIGURABLE INTELLIGENT SURFACE (RIS) ASSISTED COMMUNICATION SYSTEM**

(57)    Existing approaches for channel estimation in Reconfigurable Intelligent Surface (RIS) assisted communication systems have the disadvantage that they require separate estimation of Angle of Arrival (AoA) and Angle of Departure (AoD), requiring additional step of computationally demanding data association. Embodiments disclosed herein provide a method and system for channel estimation in RIS assisted communication systems. In this approach, the system jointly visualizes the plurality of RIS elements and the plurality of multi-antenna receiver array elements as a RIS-SIMO virtual array, thereby eliminating need to separately estimate the AoA and AoD.

A

generating, via the one or more hardware processors, a covariance matrix of the data matrix Y_E by using the data matrix Y_E and associated Hermitian matrix, where Hermitian matrix is a conjugate and transpose of data matrix Y_E — 210

determining, via the one or more hardware processors, a column space Us of the covariance matrix by performing a singular value decomposition of the covariance matrix — 212

computing, via the one or more hardware processors, a plurality of eigen vectors of a full rank transformation matrix using one or more transformation matrices and the column space Us — 214

generating, via the one or more hardware processors, the full rank transformation matrix using the computed eigen vectors — 216

obtaining, via the one or more hardware processors, values of an angle $\psi$ and an angle $\theta$ jointly using the full rank transformation matrix, wherein the $\psi$ and $\theta$ represent an angle pair — 218

200

FIG. 2B

EP 4 668 595 A1

**Description**

CROSS-REFERENCE TO RELATED APPLICATIONS AND PRIORITY

The present application claims priority to Indian application no. 202421019098, filed on March 15, 2024.

TECHNICAL FIELD

The disclosure herein generally relates to communication, and, more particularly, to a method and system for channel estimation in Reconfigurable Intelligent Surface (RIS) assisted communication system.

BACKGROUND

Reconfigurable intelligent surface (RIS) or Intelligent reflecting surface (IRS) is a technology which is considered to be essential for all future wireless communication networks. In the recent times, there has been a huge surge in research related to RIS assisted communication due to its performance gains such as improved SNR at the receiver, and higher achievable bit rate when compared to conventional communication systems. RIS is a planar array of passive metamaterials elements which have the ability to induce a desired phase-shift into the impinging signals, and thereby reflect these signals towards the desired location. Controlling phase-shifts in RIS can be accomplished using PIN diodes or varicaps as switches for RIS elements and the appropriate control signal is fed via a RIS control board. To reap the benefits offered by RIS, the beamforming coefficients of the RIS elements and the BS antenna elements has to be designed optimally, which in turn requires the accurate channel state information (CSI) to be available at both BS and RIS controller.

Many existing works address the problem of channel estimation (CE) for RIS assisted communication. One of the approaches focuses on CE for the sub-6Ghz bands. However due to the massive availability of bandwidth and other potential advantages there is a growing interest for frequency bands above 6GHz. In some other existing approaches, the CE problem is explored in the context of semi-passive RIS assisted millimeter wave (mmWave) communication system. However, this approach involves a few active elements at the RIS which escalates the power requirement, computational complexity and hardware cost. In another existing approach, a passive IRS is considered and a minimum mean squared error (MMSE) based CE approach is used and in another existing approach, a linear MMSE is utilized to estimate the cascaded channels. By invoking the inherent sparsity of mmWave channel, these approaches estimate a BS-RIS-UE cascaded channel using Orthogonal Matching Pursuit (OMP) and generalized-approximate message passing (GAMP). Another existing approach consider that the BS-RIS-UE cascaded CE at UE side with no direct channel between the BS-UE. Another existing approach attempts to obtain UE-BS direct channel, and the cascaded channel simultaneously. These approaches have the disadvantage that they perform separate estimation of Angle of Departure (AoD) and Angle of Arrival (AoA), thus requiring an additional step of computationally demanding data association.

SUMMARY

Embodiments of the present disclosure present technological improvements as solutions to one or more of the above-mentioned technical problems recognized by the inventors in conventional systems. For example, in one embodiment, a processor implemented method is provided. The method includes: receiving, via one or more hardware processors, at least one signal transmitted from a single-antenna transmitter at a multi-antenna receiver through a reconfigurable intelligent surface (RIS) over a time window; generating, via the one or more hardware processors, a signal matrix Y at the receiver by stacking a plurality of observation vectors at the multi-antenna receiver, at least one signal over the time window; vectorizing, via the one or more hardware processors, the signal matrix by jointly visualizing a plurality of RIS elements and a plurality of multi-antenna receiver array elements as a RIS-Single Input Multiple Output (SIMO) virtual array; constructing, via the one or more hardware processors, a data matrix $Y_E$, by creating each of a plurality of columns of $Y_E$ by selecting a plurality of sub-array elements of the signal matrix, wherein each column of $Y_E$ is created by sliding a window sequentially in horizontal and vertical directions, wherein in the data matrix $Y_E$, the plurality of RIS elements are represented in a first dimension and the plurality of multi-antenna receiver elements are represented in a second dimension; generating, via the one or more hardware processors, a covariance matrix of the data matrix $Y_E$ by using the data matrix $Y_E$ and associated Hermitian matrix, where Hermitian matrix is a conjugate and transpose of data matrix $Y_E$; determining, via the one or more hardware processors, a column space $U_s$ of the covariance matrix by performing a singular value decomposition of the covariance matrix; computing, via the one or more hardware processors, a plurality of eigen vectors of a full rank transformation matrix using one or more transformation matrices and the column space $U_s$; generating, via the one or more hardware processors, the full rank transformation matrix using the computed eigen vectors; and obtaining, via the one or more hardware processors, values of an angle $\psi$ and an angle $\theta$ jointly using the full rank transformation matrix, wherein the $\psi$ and $\theta$ represent an angle pair.

In an embodiment of the method, the angle pair is used to estimate a path gain ($\alpha$) for channel estimation of a channel between the single-antenna transmitter and the multi-antenna receiver.

In an embodiment of the method, the received at least one signal is represented as:

$$y_k = (F.diag(w_k).g)x_k + n_k$$

where, $y_k$ is an observation vector in the time window, F represents channel between RIS - multi-antenna receiver, g represents channel between single-antenna transmitter-RIS, $diag(w_k)$ is a reflection coefficient of the RIS, $x_k$ is a pilot for the time window, and $n_k$ is a gaussian noise.

In another embodiment of the method, the signal matrix Y is represented as:

$$Y = U_M(\psi)diag(\alpha)U_K^H(\theta)X + N$$

where, $U_M(\psi)$ is an array response matrix at the multi-antenna receiver, $diag(\alpha)$ represents diagonal matrix path gains, $U_K^H(\theta)$ is an array response matrix of the RIS, wherein $U_K^H(\theta)$ is a product of $U_K^H(\theta)$ and a reflection matrix of RIS, and wherein $\theta$ is a combination of the angle of arrival and the angle of departure at the RIS and $\psi$ is the angle of arrival at the multi-antenna receiver.

In another embodiment of the method, vectorizing the signal matrix by jointly visualizing a plurality of RIS elements and a plurality of multi-antenna receiver array elements as the RIS-SIMO virtual array comprises of applying a Khatri-Rao property on the at least one signal, wherein after applying the Khatri-Rao property, the at least one signal is represented as:

$$y = \overrightarrow{(Y)} = \left(U_k(\theta) \odot U_M(\psi)\right)\alpha + n,$$

*where*, $y$, $n \in C^{MK*1}$, $U_M \in C^{M*L} \wedge U_K \in C^{K*L}$.

In another embodiment of the method, the one or more transformation matrices are generated by computing a left transformation matrix and a right transformation matrix for $\theta$ and $\psi$, satisfying a criteria that the left transformation matrix is multiplied with a sub-array matrix and the right transformation matrix is multiplied with the sub-array matrix in order to separate the $\theta$ and $\psi$ as diagonal entries of associated diagonal matrices $\Lambda_\theta$, $\Lambda_\psi$.

In an embodiment, a system is provided. The system includes one or more hardware processors, a communication interface, and a memory storing a plurality of instructions. The plurality of instructions cause the one or more hardware processors to: receive at least one signal transmitted from a transmitter at a receiver through a reconfigurable intelligent surface (RIS) over a time window; generate a signal matrix Y at the receiver by stacking a plurality of observation vectors in the received at least one signal over the time window; vectorize the signal matrix by jointly visualizing a plurality of RIS elements and a plurality of multi-antenna receiver array elements as a RIS-SIMO virtual array; construct a data matrix $Y_E$, by creating each of a plurality of columns of $Y_E$ by selecting a plurality of sub-array elements of the signal matrix, wherein each column of $Y_E$ is created by sliding a window sequentially in horizontal and vertical directions, wherein in the data matrix $Y_E$, the plurality of RIS elements are represented in a first dimension and the plurality of multi-antenna receiver array elements are represented in a second dimension; generate a covariance matrix of the data matrix $Y_E$ by using the data matrix $Y_E$ and associated Hermitian matrix, where Hermitian matrix is a conjugate and transpose of data matrix $Y_E$; determine a column space $U_s$ of the covariance matrix by performing a singular value decomposition of the covariance matrix; compute a plurality of eigen vectors of a full rank transformation matrix using one or more transformation matrices and the column space $U_s$; generate the full rank transformation matrix using the computed eigen vectors; and obtain values of an angle $\psi$ and an angle $\theta$ jointly using the full rank transformation matrix, wherein the $\psi$ and $\theta$ represent an angle pair.

In an embodiment of the system, the one or more hardware processors are configured to estimate a path gain ($\alpha$) for channel estimation of a channel between the single-antenna transmitter and the multi-antenna receiver using the angle pair.

In an embodiment of the system, the received at least one signal is represented as:

$$y_k = (F.diag(w_k).g)x_k + n_k$$

where, $y_k$ is an observation vector in the time window, F represents channel between RIS - multi-antenna receiver, g represents channel between single-antenna transmitter-RIS, $diag(w_k)$ is a reflection coefficient of the RIS, $x_k$ is a pilot for the time window, and $n_k$ is a gaussian noise.

In another embodiment of the system, the signal matrix Y is represented as:

$$Y = U_M(\psi) diag(\alpha) U_K^H(\theta) X + N$$

where, $U_M(\psi)$ is an array response matrix at the multi-antenna receiver, $diag(\alpha)$ represents diagonal matrix path gains, $U_K^H(\theta)$ is an array response matrix of the RIS, wherein $U_K^H(\theta)$ is a product of $U_K^H(\theta)$ and a reflection matrix of RIS, and wherein θ is a combination of the angle of arrival and the angle of departure at the RIS and ψ is the angle of arrival at the multi-antenna receiver.

In another embodiment of the system, the one or more hardware processors are configured to vectorize the signal matrix by jointly visualizing a plurality of RIS elements and a plurality of multi-antenna receiver array elements as the RIS-SIMO virtual array, by applying a Khatri-Rao property on the at least one signal, wherein after applying the Khatri-Rao property, the at least one signal is represented as:

$$y = \overrightarrow{(Y)} = \left( U_k(\theta) \odot U_M(\psi) \right)\alpha + n,$$

where, $y$, $n \in C^{MK*1}$, $U_M \in C^{M*L} \wedge U_K \in C^{K*L}$.

In another embodiment of the system, the one or more hardware processors are configured to generate the one or more transformation matrices by computing a left transformation matrix and a right transformation matrix for θ and ψ, satisfying a criteria that the left transformation matrix is multiplied with a sub-array matrix and the right transformation matrix is multiplied with the sub-array matrix in order to separate the θ and ψ as diagonal entries of associated diagonal matrices $\Lambda_\theta$, $\Lambda_\psi$.

In yet another aspect, a non-transitory computer readable medium is provided. The non-transitory computer readable medium includes a plurality of instructions, which when executed, cause one or more hardware processors to: receive at least one signal transmitted from a transmitter at a receiver through a reconfigurable intelligent surface (RIS) over a time window; generate a signal matrix Y at the receiver by stacking a plurality of observation vectors in the received at least one signal over the time window; vectorize the signal matrix by jointly visualizing a plurality of RIS elements and a plurality of multi-antenna receiver array elements as a RIS-SIMO virtual array; construct a data matrix $Y_E$, by creating each of a plurality of columns of $Y_E$ by selecting a plurality of sub-array elements of the signal matrix, wherein each column of $Y_E$ is created by sliding a window sequentially in horizontal and vertical directions, wherein in the data matrix $Y_E$, the plurality of RIS elements are represented in a first dimension and the plurality of multi-antenna receiver array elements are represented in a second dimension; generate a covariance matrix of the data matrix $Y_E$ by using the data matrix $Y_E$ and associated Hermitian matrix, where Hermitian matrix is a conjugate and transpose of data matrix $Y_E$; determine a column space $U_s$ of the covariance matrix by performing a singular value decomposition of the covariance matrix; compute a plurality of eigen vectors of a full rank transformation matrix using one or more transformation matrices and the column space $U_s$; generate the full rank transformation matrix using the computed eigen vectors; and obtain values of an angle ψ and an angle θ jointly using the full rank transformation matrix, wherein the ψ and θ represent an angle pair.

In an embodiment of the non-transitory computer readable medium, the angle pair is used to estimate a path gain (α) for channel estimation of a channel between the single-antenna transmitter and the multi-antenna receiver.

In an embodiment of the non-transitory computer readable medium, the received at least one signal is represented as:

$$y_k = (F.diag(w_k).g)x_k + n_k$$

where, $y_k$ is an observation vector in the time window, F represents channel between RIS - multi-antenna receiver, g represents channel between single-antenna transmitter-RIS, $diag(w_k)$ is a reflection coefficient of the RIS, $x_k$ is a pilot for the time window, and $n_k$ is a gaussian noise.

In another embodiment of the non-transitory computer readable medium, the signal matrix Y is represented as:

$$Y = U_M(\psi) diag(\alpha) U_K^H(\theta) X + N$$

where, $U_M(\psi)$ is an array response matrix at the multi-antenna receiver, $diag(\alpha)$ represents diagonal matrix path gains, $U_K^H(\theta)$ is an array response matrix of the RIS, wherein $U_K^H(\theta)$ is a product of $U_K^H(\theta)$ and a reflection matrix of RIS, and wherein θ is a combination of the angle of arrival and the angle of departure at the RIS and ψ is the angle of arrival at the multi-antenna receiver.

In another embodiment of the non-transitory computer readable medium, the one or more hardware processors are configured to vectorize the signal matrix by jointly visualizing a plurality of RIS elements and a plurality of multi-antenna receiver array elements as the RIS-SIMO virtual array, by applying a Khatri-Rao property on the at least one signal, wherein after applying the Khatri-Rao property, the at least one signal is represented as:

$$y = \overrightarrow{(Y)} = \big( U_k(\theta) \odot U_M(\psi) \big)\alpha + n,$$

where, $y$, $n \in C^{MK*1}$, $U_M \in C^{M*L} \wedge U_K \in C^{K*L}$.

In another embodiment of the non-transitory computer readable medium, the one or more hardware processors are configured to generate the one or more transformation matrices by computing a left transformation matrix and a right transformation matrix for $\theta$ and $\psi$, satisfying a criteria that the left transformation matrix is multiplied with a sub-array matrix and the right transformation matrix is multiplied with the sub-array matrix in order to separate the $\theta$ and $\psi$ as diagonal entries of associated diagonal matrices $\Lambda_\theta$, $\Lambda_\psi$.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A illustrates an exemplary reconfigurable intelligent surface (RIS) assisted communication system according to some embodiments of the present disclosure.

FIG. 1B depicts an exemplary system for channel estimation in the RIS assisted communication system of FIG. 1, according to some embodiments of the present disclosure.

FIGS. 2A and 2B (collectively referred to as FIG. 2) is a flow diagram illustrating steps involved in the process of channel estimation in the RIS assisted communication system, in accordance with some embodiments of the present disclosure.

FIGS. 3A through 3F are graphs depicting example values indicating performance of the system of FIG. 1B during the channel estimation, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Many existing works address the problem of channel estimation (CE) for RIS assisted communication. One of the approaches focuses on CE for the sub-6Ghz bands. However due to the massive availability of bandwidth and other potential advantages there is a growing interest for frequency bands above 6GHz. In some other existing approaches, the CE problem is explored in the context of semi-passive RIS assisted millimeter wave (mmWave) communication system. However, this approach involves a few active elements at the RIS which escalates the power requirement, computational complexity and hardware cost. In another existing approach, a passive IRS is considered and a minimum mean squared error (MMSE) based CE approach is used and in another existing approach, a linear MMSE is utilized to estimate the cascaded channels. By invoking the inherent sparsity of mmWave channel, these approaches estimate a multi-antenna receiver-RIS-single-antenna transmitter cascaded channel using Orthogonal Matching Pursuit (OMP) and generalized-approximate message passing (GAMP). Another existing approach consider that the multi-antenna receiver-RIS-single-antenna transmitter cascaded CE at single-antenna transmitter side with no direct channel between the multi-antenna receiver - sing-channel transmitter. Another existing approach attempts to obtain single-antenna transmitter-multi-antenna receiver direct channel, and the cascaded channel simultaneously. These approaches have the disadvantage that they perform separate estimation of Angle of Departure (AoD) and Angle of Arrival (AoA), thus requiring an additional step of computationally demanding data association.

To address these challenges, embodiments disclosed herein provide a channel estimation approach which involves the following steps. Initially, at least one signal transmitted from a transmitter is received at a receiver through a reconfigurable intelligent surface (RIS) over a time window. Further, a signal matrix Y is generated at the receiver by stacking a plurality of observation vectors at the receiver, at least one signal over the time window. Further, the signal matrix is vectorized by jointly visualizing a plurality of RIS elements and a plurality of multi-antenna receiver array elements as a RIS-Single Input Multiple Output (SIMO) virtual array. Further, a data matrix $Y_E$ is constructed by creating each of a plurality of columns of $Y_E$ by selecting a plurality of sub-array elements of the signal matrix, wherein each column of $Y_E$ is created by sliding a window sequentially in horizontal and vertical directions, wherein in the data matrix $Y_E$, the plurality of RIS elements are represented in a first dimension and the plurality of multi-antenna receiver array elements are represented in a second dimension. Further, a covariance matrix of the data matrix $Y_E$ is generated by using the data matrix $Y_E$ and associated Hermitian matrix, where Hermitian matrix is a conjugate and transpose of data matrix $Y_E$. Further, a column space $U_s$ of the covariance matrix is determined by performing a singular value decomposition of the covariance matrix. Further, a plurality of eigen vectors of a full rank transformation matrix are computed using one or more transformation matrices and the column space $U_s$. Further, the full rank transformation matrix is generated using the computed eigen vectors. Then values of an angle $\psi$ and an angle $\theta$ are jointly obtained using the full rank transformation matrix, wherein the $\psi$ and $\theta$ represent channel estimation of a channel between the single-antenna transmitter and the and the multi-antenna receiver via the RIS. This approach jointly visualizes the plurality of RIS elements and the plurality of multi-antenna receiver array elements as a RIS-Single Input Multiple Output (SIMO) virtual array, thereby eliminating need to separately estimate the AoA and AoD, thus addressing the challenges that exist with the existing approaches.

Notations used:

All uppercase and lowercase bold letters represent matrices, and vectors respectively. The operators $(\cdot)^T$, $(\cdot)^H$, $(\cdot)^\dagger$, $\odot$ and $\otimes$ represent transpose, conjugate transpose, pseudo-inverse, Khatri-Rao product, and Kronecker product respectively. $\mathbf{I}_k$ is an identity matrix of dimension $k \times k$. Also, $[\mathbf{A}]_{i,j}$ represents $i,j$th element of A. The expression A$(:, i : j)$ denotes that all the rows, and $i$ to $j$ columns of A are selected. For a vector a, a$(i : j)$ represents the elements $i$ to $j$ of vector a.

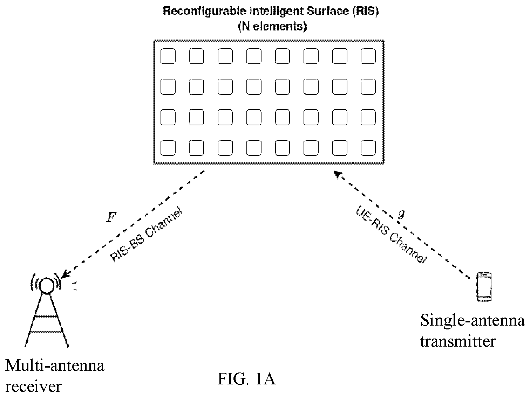

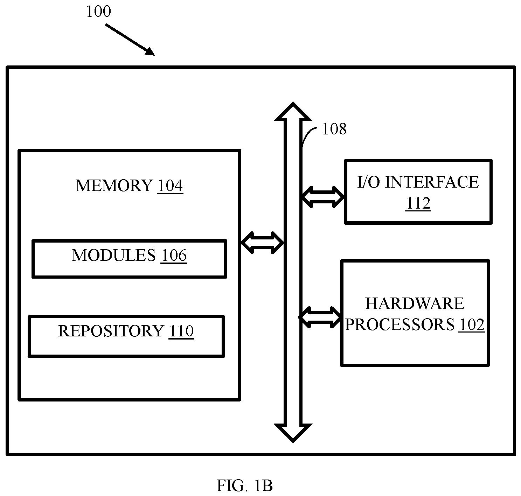

Referring now to the drawings, and more particularly to FIG. 1 through FIG. 3C, where similar reference characters denote corresponding features consistently throughout the figures, there are shown preferred embodiments and these embodiments are described in the context of the following exemplary system and/or method.

FIG. 1A illustrates an exemplary reconfigurable intelligent surface (RIS) assisted communication system according to some embodiments of the present disclosure. Communication between a multi-antenna receiver and a single-channel transmitter through the RIS is depicted. In various example embodiments, the multi-antenna receiver is a Base Station (BS) and the single-channel transmitter is a User Equipment (UE). In this scenario, the communication between the BS and the UE is facilitated through 2 channels, i.e., a UE-RIS channel and a RIS-BS channel. The communication between the UE and BS may be of two types, i.e., a) an uplink communication which is from the UE to the BS through the RIS, and b) a downlink communication which is from the BS to the UE through the RIS. In the uplink communication, the UE acts as a transmitter and the BS acts as a receiver, and in the downlink communication, the BS acts as the transmitter and the UE acts as the receiver. In both the scenarios, the channel estimation is being done by the receiver, using hardware components as depicted in FIG. 1B.

FIG. 1B depicts an exemplary system for channel estimation in the RIS assisted communication system of FIG. 1, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the channel estimation in RIS assisted communication network. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the channel estimation in RIS assisted communication network.

The data repository (or repository) 110 may include a plurality of abstracted piece of code for refinement and data that is processed, received, or generated as a result of the execution of the plurality of modules in the module(s) 106.

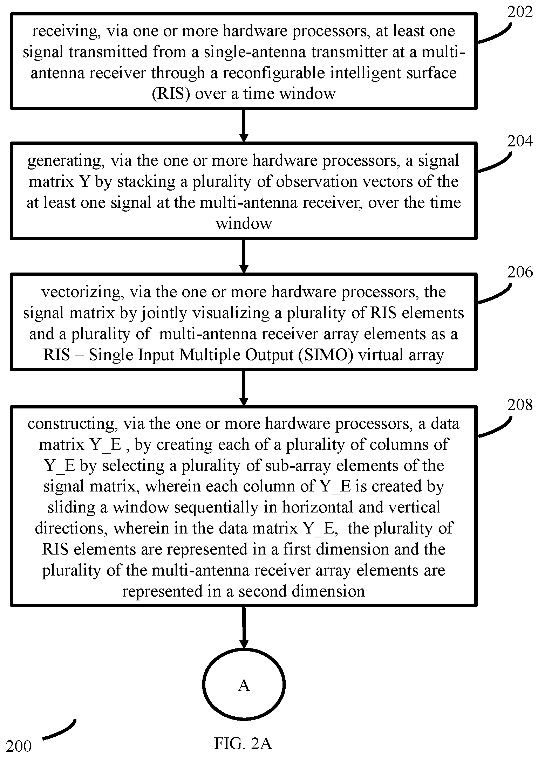

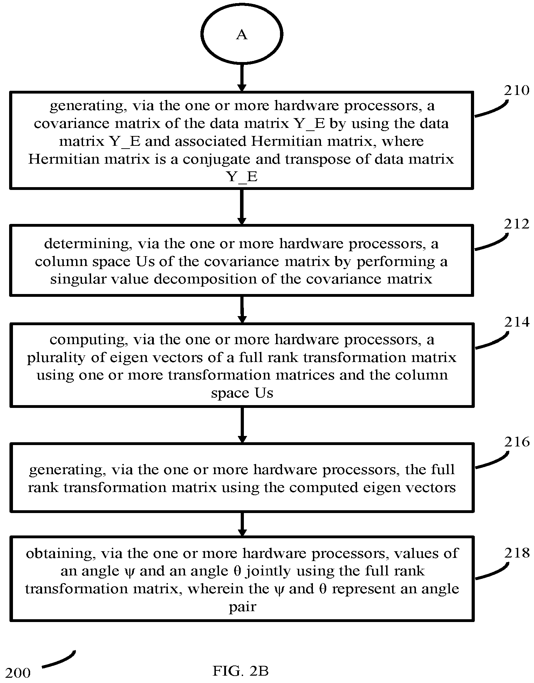

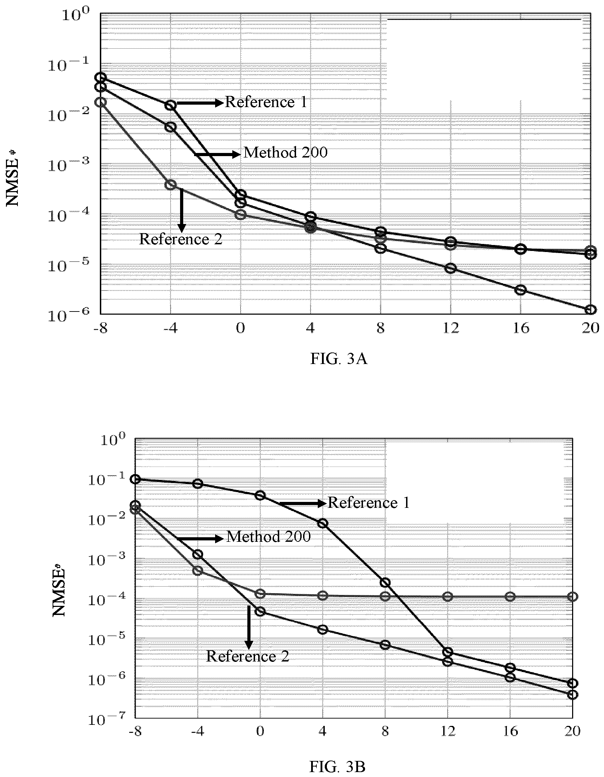

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the flow diagram in FIG. 2, and the example diagrams in FIGS. 3A and 3B.

At step 202 of the method 200, a multi-antenna receiver receives, via one or more hardware processors 102, at least one signal transmitted from a single antenna transmitter through a reconfigurable intelligent surface (RIS) over a time window. The multi antenna receiver maybe a Base Station (BS), and the single antenna transmitter maybe a user Equipment (UE). In an embodiment, data transmission is uplink transmission, i.e., from the UE to the BS. In another embodiment, the data transmission is downlink transmission, i.e., from the BS to the UE. The multi antenna receiver is alternately referred to as receiver, and the single antenna transmitter is alternately referred to as transmitter. The received at least one signal is represented as:

$$y_k = (F.\,diag(w_k).\,g)x_k + n_k \qquad \text{--- (1)}$$

where, $y_k$ is an observation vector in the time window, F represents channel between RIS-multi-antenna receiver, g represents channel between single-antenna transmitter-RIS, $diag(w_k)$ is a reflection coefficient of the RIS, $x_k$ is a pilot for the time window, and $n_k$ is a gaussian noise.

Further, at step 204 of the method 200, the receiver generates, via the one or more hardware processors 102, a signal matrix Y by stacking a plurality of observation vectors $y_k$ at the receiver, for the at least one signal over the time window. The signal matrix is represented as:

$$Y = U_M(\psi)diag(\alpha)U_K^H(\theta)X + N \quad \text{--- (2)}$$

where, $U_M(\psi)$ is an array response matrix at the receiver, $diag(\alpha)$ represents diagonal matrix path gains, $U_K^H(\theta)$ is an array response matrix of the RIS, wherein $U_K^H(\theta)$ is a product of $U_K^H(\theta)$ and a reflection matrix (W) of RIS, and wherein $\theta$ is a combination of the angle of arrival and the angle of departure at the RIS and $\psi$ is the angle of arrival at the receiver. The reflection matrix (W) is represented as:

$$W = \begin{bmatrix} I_K \\ 0_{N-K} 0_K^T \end{bmatrix} \qquad \text{--- (3)}$$

Further, at step 206 of the method 200, the receiver vectorizes, via the one or more hardware processors 102, the signal matrix by jointly visualizing a plurality of RIS elements and a plurality of multi-antenna receiver array elements as a RIS-SIMO virtual array. In an embodiment, the receiver uses a Khatri-Rao property to vectorize the signal matrix. At this stage, the signal matrix is represented as:

$$y = \overrightarrow{(Y)} = \big(U_k(\theta) \odot U_M(\psi)\big)\alpha + n \text{ --- (4)}$$

*where, y, $n \in C^{MK*1}$, $U_M \in C^{M*L} \wedge U_K \in C^{K*L}$*

The Khatri-Rao property used for the vectorization of the signal matrix is represented as:

$$\overrightarrow{\{PSQ^H\}} = (Q \odot P)s,$$

$$for P \in C^{M*Z}, Q \in C^{N*Z}, s \in C^{Z*1} \text{ and } S = diag(s) \in C^{Z*Z}$$

$$\text{---- (5)}$$

Further, at step 208 of the method 200, the receiver constructs, via the one or more hardware processors 102, a data matrix $Y_E$. To construct the data matrix $Y_E$, the receiver creates a plurality of columns of $Y_E$. Each of the plurality of columns is created by selecting a plurality of sub-array elements of the signal matrix, by sliding a window sequentially in horizontal and vertical directions. In the data matrix $Y_E$, the plurality of RIS elements are represented in a first dimension and the plurality of multi-antenna receiver array elements are represented in a second dimension. In the context of the embodiments disclosed herein, the terms first dimension and second dimension may represent/indicate one of horizontal and vertical directions. Each column of the data matrix corresponds to the array response of the 2-D sub-array of size ($K/2 \times M/2$).

Further, at step 210 of the method 200, the receiver generates, via the one or more hardware processors 102, a covariance matrix of the data matrix $Y_E$ by using the data matrix $Y_E$ and associated Hermitian matrix. The Hermitian matrix is a conjugate and transpose of data matrix $Y_E$. The covariance matrix is represented as:

$$R = Y_E Y_E^H \in C^{\frac{MK}{4}*MK}_{4} \text{ of } Y_E \qquad \text{--- (6)}$$

Further, at step 212 of the method 200, the receiver determines, via the one or more hardware processors 102, a column space $U_s$ of the covariance matrix, by performing a singular value decomposition of the covariance matrix. The singular value decomposition is performed as:

$$SVD(R) = [U_s U_n] \begin{bmatrix} D_s & 0 \\ 0 & D_n \end{bmatrix} [U_s U_n]^H , \qquad \text{--- (7)}$$

where,

$U_s$ are the column space of R, $D_s$ represents a prominent singular value of R, $U_n$ and $D_n$ are representing null space. The $D_s$ and $D_n$ are diagonal matrices consisting of singular values of column space and null space, respectively as the diagonal entries. Under a no noise condition, the diagonal matrix $D_n = 0$. Let $U_{KM}^{\left(\frac{K}{2},\frac{M}{2}\right)}$ denote a 2 dimensional sub-array response used to generate $Y_E$. As $U_s$ and $U_{KM}^{\left(\frac{K}{2},\frac{M}{2}\right)}$ span same sub-space under no noise:

$$U_{KM}^{\left(\frac{K}{2},\frac{M}{2}\right)} = U_s T \quad \text{--- (8)}$$

Where, $T$ is a full rank transformation matrix of dimension $L * L$. $U_{KM}^{\left(\frac{K}{2},\frac{M}{2}\right)}$ has similar structure as that of $U_{KM}^D$ with $D_1 = \frac{K}{2}$ and $D_2 = \frac{M}{2}$.

Further, at step 214 of the method 200, the receiver computes, via the one or more hardware processors 102, a plurality of eigen vectors of a full rank transformation matrix using one or more transformation matrices and the column space $U_s$. The one or more transformation matrices are defined by the receiver as:

$$T_L^{\psi} = \begin{bmatrix} I_{\frac{K}{2}} \otimes I_{\frac{M}{2}}\left(2:\frac{M}{2},:\right) \\ I_{\frac{K}{2}} \otimes [0,1,....1] \end{bmatrix} \qquad \text{--- (9)}$$

$$T_R^{\psi} = \left[T_L^{\psi}(:,2:MK/4)\,T_L^{\psi}(:,1)\right] \qquad \text{--- (10)}$$

$$T_L^{\theta} = \begin{bmatrix} I_{\frac{K}{2}}\left(2:\frac{K}{2},:\right) \otimes I_{\frac{M}{2}} \\ [0,1,....1] \otimes I_{\frac{M}{2}} \end{bmatrix} \qquad \text{--- (11)}$$

$$T_R^{\theta} = \left[T_L^{\theta}(:,M/2+1:MK/4)\,T_L^{\theta}(:,1:M/2)\right] \qquad \text{--- (12)}$$

Using these transformation matrices, the following relationships are obtained.

$$T_L^{\psi}\,U_{KM}^{(K/2,M/2)} = T_R^{\psi}\,U_{KM}^{(K/2,M/2)}\Lambda^{\psi}, \qquad \text{--- (13)}$$

$$T_L^{\theta}\,U_{KM}^{(K/2,M/2)} = T_R^{\theta}\,U_{KM}^{(K/2,M/2)}\Lambda^{\theta}, \qquad \text{--- (14)}$$

Where, $\Lambda^{\theta}$ and $\Lambda^{\psi}$ are diagonal matrices with elements being $\{e_{j\pi cos(\psi 1)},...e_{j\pi cos(\psi L)}\}$ and $\{e_{j\pi cos(\theta 1)},...e_{j\pi cos(\theta L)}\}$ respectively. These equations are further used to obtain:

$$\Lambda^{\psi} = T^{-1}\left(\left(T_R^{\psi}U_s\right)^t T_L^{\psi}U_s\right)_T \qquad \text{---- (15)}$$

$$\Lambda^{\theta} = T^{-1}\left(\left(T_R^{\theta}U_s\right)^t T_L^{\theta}U_s\right)_T \qquad \text{---- (16)}$$

(15) and (16) are then combined to get:

$$\Lambda^{\psi} + \Lambda^{\theta} = T^{-1}\left(\left(T_R^{\psi}U_s\right)T_L^{\psi}U_s + \left(T_R^{\theta}U_s\right)T_L^{\theta}U_s\right) \text{--- (17)}$$

$$T^{-1}\left(A_{\psi,\theta}\right)T, \quad \text{--- (18)}$$

Where

$$A_{\psi,\theta} = \left(T_R^{\psi}U_s\right)^t T_L^{\psi}U_s + \left(T_R^{\theta}U_s\right)^t T_L^{\theta}U_s \qquad \text{--- (19)}$$

Further, at step 216 of the method 200, the receiver generates, via the one or more hardware processors 102, the full rank transformation matrix using the computed eigen vectors.

Further, at step 218 of the method 200, the receiver obtains, via the one or more hardware processors 102, values of an angle $\psi$ and an angle $\theta$ jointly using the full rank transformation matrix, wherein the $\psi$ and $\theta$ represent channel estimation of a channel between the single-antenna transmitter and the and the multi-antenna receiver via the RIS. At this stage the receiver uses property of similar matrices. Since $\Lambda^{\theta}$ and $\Lambda^{\psi}$ are diagonal matrices, it can be observed that eigen vectors of $A_{\psi,\theta}$ are columns of T. Upon estimating T, the receiver uses the estimated T in (15), (16) to obtain estimates of $\{\psi, \theta\}$ angle pair, thus resulting in estimation of $\{\psi, \theta\}$ jointly without the additional step of mapping $\psi$ and $\theta$. The receiver then uses the angle pair to estimate a path gain ($\alpha$) for channel estimation of a channel between the single-antenna transmitter and the multi-antenna receiver. In an embodiment, apart from the channel estimation, the angle pair maybe used for other applications as well, for example, transmitter localization.

Experimental Data:

In this section, we performance of the method 200 is illustrated by varying Signal to Noise Ratio (SNR) and number of pilots, $K$. Normalised mean squared error (NMSE) was used to quantify the error in estimating the angles $\psi$ and

$\theta$, and pathgains $\alpha$.

The NMSE for estimating a vector $\delta$ is given by:

$$NMSE_\delta = \sum_{s=1}^{S} \frac{\|\delta_s - \hat{\delta}_s\|_2^2}{\|\delta_s\|_2^2}, \quad --- (20)$$

Where $\hat{\delta}_s$ is the estimate of $\delta$ and $S$ is number of Monte-Carlo simulations. Unless specified, for fair comparison with reference data, the following values are considered: $N = 32$, $M = 8$, $K = 14$, $L_f = 3$, and $L_g = 1$.

In FIGS. 3A and 3B, performance of the method 200 is compared with a reference 1 and a reference 2. In an embodiment, the reference 1 is JDICE algorithm, which is an approach used in a paper titled "Joint Direct and Indirect Channel Estimation for_RIS-Assisted_Millimeter-wave Systems Based on Array Signal Processing", which estimates the angles $\psi$ and $\theta$, respectively for varying SNR. From the figures, it can be inferred that the method 200 outperforms the considered reference approaches. Performance of the method 200 was found to be improving with increasing values of SNR. As the method 200 estimates the angles jointly, an error propagation effect noticed in the reference approach JDICE was not present in the result of the method 200.

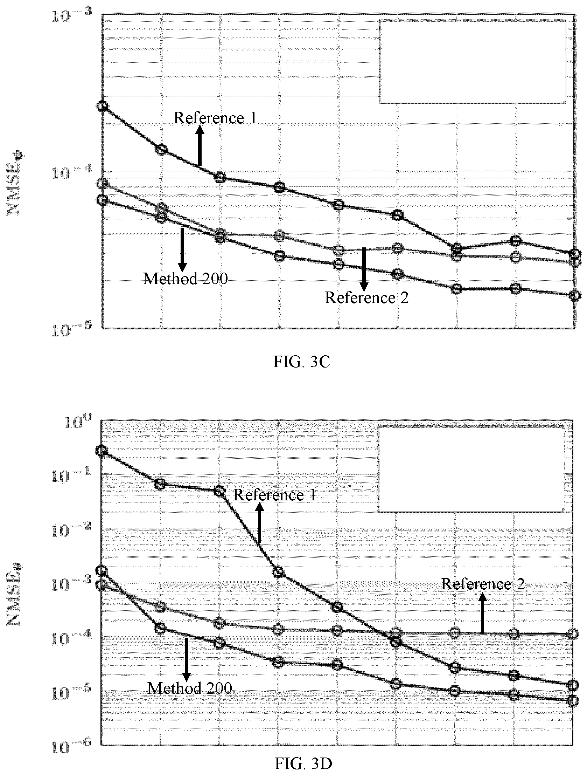

In FIGS. 3C and 3D, performance of NMSE of $\theta$ and $\psi$ against the number of pilots K for a fixed SNR of 6dB is plotted. From the graphs, it can be inferred that the method 200 performs better than JDICE at lower values of $K$, while for higher values of $K$, performances are at par.

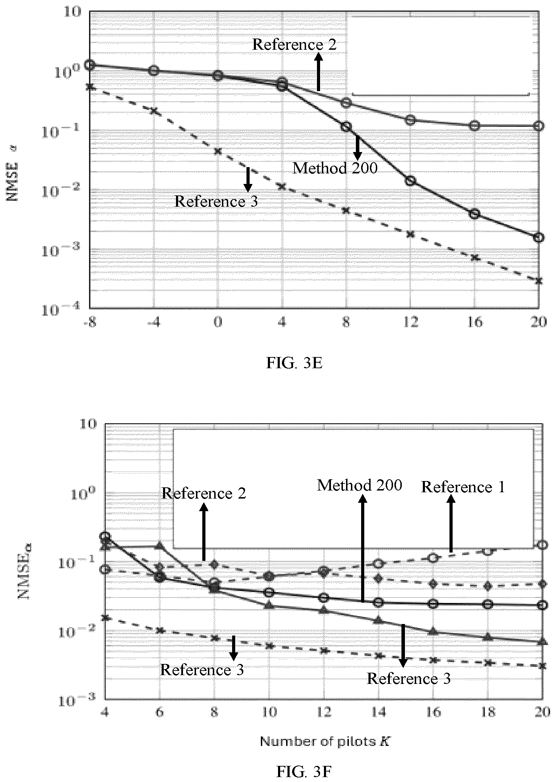

**[0054]** In FIGS. 3E and 3F, NMSE performance of path gains $\alpha$ is plotted against varying SNR and $K$, respectively. During the experiments, Oracle estimator was considered as benchmark scheme wherein, LS estimate of $\alpha$ is found with an assumption that $\{\psi, \theta\}$ angle pair is known a prior. Similarly, for the method 200, the estimate of $\alpha$ was computed using LS estimator, after obtaining the estimates, $\{\psi, \theta\}$ angle pair. These plots demonstrate the performance of the method 200 with respect to the theoretical performance bound provided by Oracle estimator. In the FIG. 3E, for the method 200, as the estimation of $\{\psi, \theta\}$ improves as SNR increases, the performance approaches relatively closer to the oracle based estimator. In FIG. 3F, the NMSE of the method 200 decreases with increasing $K$.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of channel estimation in RIS assisted communication networks. The embodiment, thus provides a mechanism for jointly visualizes the plurality of RIS elements and the plurality of multi-antenna receiver array elements as a RIS-SIMO virtual array, thereby eliminating need to separately estimate Angle of Arrival (AoA) and Angle of Departure (AoD). Moreover, the embodiments herein further provide a mechanism of channel estimation by jointly visualizing the plurality of RIS elements and the plurality of multi-antenna receiver array elements.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.     A processor implemented method, comprising:

receiving (202), via one or more hardware processors, at least one signal transmitted from a single-antenna transmitter at a multi-antenna receiver through a reconfigurable intelligent surface (RIS) over a time window;
generating (204), via the one or more hardware processors, a signal matrix Y by stacking a plurality of observation vectors of the at least one signal at the multi-antenna receiver, over the time window;
vectorizing (206), via the one or more hardware processors, the signal matrix by jointly visualizing a plurality of RIS elements and a plurality of multi-antenna receiver array elements as a RIS - Single Input Multiple Output (SIMO) virtual array;
constructing (208), via the one or more hardware processors, a data matrix $Y_E$, by creating each of a plurality of columns of $Y_E$ by selecting a plurality of sub-array elements of the signal matrix, wherein each column of $Y_E$ is created by sliding a window sequentially in horizontal and vertical directions, wherein in the data matrix $Y_E$, the plurality of RIS elements are represented in a first dimension and the plurality of the multi-antenna receiver array elements are represented in a second dimension;
generating (210), via the one or more hardware processors, a covariance matrix of the data matrix $Y_E$ by using the data matrix $Y_E$ and associated Hermitian matrix, where Hermitian matrix is a conjugate and transpose of data matrix $Y_E$;
determining (212), via the one or more hardware processors, a column space $U_s$ of the covariance matrix by performing a singular value decomposition of the covariance matrix;
computing (214), via the one or more hardware processors, a plurality of eigen vectors of a full rank transformation matrix using one or more transformation matrices and the column space $U_s$;
generating (216), via the one or more hardware processors, the full rank transformation matrix using the computed eigen vectors; and
obtaining (218), via the one or more hardware processors, values of an angle $\psi$ and an angle $\theta$ jointly using the full rank transformation matrix,
wherein the $\psi$ and $\theta$ represent an angle pair.

2.     The method as claimed in claim 1, wherein the angle pair is used to estimate a path gain ($\alpha$) for channel estimation of a channel between the single-antenna transmitter and the multi-antenna receiver.

3.     The method as claimed in claim 1, wherein the received at least one signal is represented as:

$$y_k = (F.diag(w_k).g)x_k + n_k$$

where, $y_k$ is an observation vector in the time window, F represents channel between RIS- multi-antenna receiver, g represents channel between single-antenna transmitter RIS, $diag(w_k)$ is a reflection coefficient of the RIS, $x_k$ is a pilot for the time window, and $n_k$ is a gaussian noise.

4. The method as claimed in claim 1, wherein the signal matrix Y is represented as:

$$Y = U_M(\psi)diag(\alpha)U_K^H(\theta)X + N$$

where, $U_M(\psi)$ is an array response matrix at the multi-antenna receiver, $diag(\alpha)$ represents diagonal matrix path gains, $U_K^H(\theta)$ is an array response matrix of the RIS, wherein $U_K^H(\theta)$ $_{(\theta)}$ is a product of $U_K^H(\theta)$ and a reflection matrix of RIS, and wherein $\theta$ is a combination of the angle of arrival and the angle of departure at the RIS and $\psi$ is the angle of arrival at the multi-antenna receiver.

5. The method as claimed in claim 1, wherein vectorizing the signal matrix by jointly visualizing a plurality of RIS elements and a plurality of multi-antenna receiver array elements as the RIS - SIMO virtual array comprises of applying a Khatri-Rao property on the at least one signal, wherein after applying the Khatri-Rao property, the at least one signal is represented as:

$$y = \overrightarrow{(Y)} = \big(U_k(\theta) \odot U_M(\psi)\big)\alpha + n,$$

where, $y$, $n \in C^{MK*1}$, $U_M \in C^{M*L} \wedge U_K \in C^{K*L}$.

6. The method as claimed in claim 1, wherein the one or more transformation matrices are generated by computing a left transformation matrix and a right transformation matrix for $\theta$ and $\psi$, satisfying a criteria that the left transformation matrix is multiplied with a sub-array matrix and the right transformation matrix is multiplied with the sub-array matrix in order to separate the $\theta$ and $\psi$ as diagonal entries of associated diagonal matrices $\Lambda_\theta$, $\Lambda_\psi$.

7. A system (100), comprising:

  one or more hardware processors (102);
  a communication interface (112); and
  a memory (104) storing a plurality of instructions, wherein the plurality of instructions cause the one or more hardware processors to:

    receive at least one signal transmitted from a single-antenna transmitter at a multi-antenna receiver through a reconfigurable intelligent surface (RIS) over a time window;
    generate a signal matrix Y by stacking a plurality of observation vectors of the at least one signal at the multi-antenna receiver, over the time window;
    vectorize the signal matrix by jointly visualizing a plurality of RIS elements and a plurality of multi-antenna receiver array elements as a RIS - SIMO virtual array;
    construct a data matrix $Y_E$, by creating each of a plurality of columns of $Y_E$ by selecting a plurality of sub-array elements of the signal matrix, wherein each column of $Y_E$ is created by sliding a window sequentially in horizontal and vertical directions, wherein in the data matrix $Y_E$, the plurality of RIS elements are represented in a first dimension and the plurality of the multi-antenna receiver array elements are represented in a second dimension;
    generate a covariance matrix of the data matrix $Y_E$ by using the data matrix $Y_E$ and associated Hermitian matrix, where Hermitian matrix is a conjugate and transpose of data matrix $Y_E$;
    determine a column space $U_s$ of the covariance matrix by performing a singular value decomposition of the covariance matrix;
    compute a plurality of eigen vectors of a full rank transformation matrix using one or more transformation matrices and the column space $U_s$;
    generate the full rank transformation matrix using the computed eigen vectors; and
    obtain values of an angle $\psi$ and an angle $\theta$ jointly using the full rank transformation matrix, wherein the $\psi$ and $\theta$ represent an angle pair.

8. The system as claimed in claim 7, wherein the one or more hardware processors are configured to estimate a path gain ($\alpha$) using the angle pair, for channel estimation of a channel between the single-antenna transmitter and the multi-antenna receiver.

9. The system as claimed in claim 7, wherein the received at least one signal is represented as:

$$y_k = (F.diag(w_k).g)x_k + n_k$$

where, $y_k$ is an observation vector in the time window, F represents channel between RIS- multi-antenna receiver, g represents channel between single-antenna transmitter RIS, $diag(w_k)$ is a reflection coefficient of the RIS, $x_k$ is a pilot for the time window, and $n_k$ is a gaussian noise.

10. The system as claimed in claim 7, wherein the signal matrix Y is represented as:

$$Y = U_M(\psi)diag(\alpha)U_K^H(\theta)X + N$$

where, $U_M(\psi)$ is an array response matrix at the multi-antenna receiver, $diag(\alpha)$ represents diagonal matrix path gains, $U_K^H(\theta)$ is an array response matrix of the RIS, wherein $U_K^H(\theta)$ is a product of $U_K^H(\theta)$ and a reflection matrix of RIS, and wherein $\theta$ is a combination of the angle of arrival and the angle of departure at the RIS and $\psi$ is the angle of arrival at the multi-antenna receiver.

11. The system as claimed in claim 7, wherein the one or more hardware processors are configured to vectorize the signal matrix by jointly visualizing a plurality of RIS elements and a plurality of multi-antenna receiver array elements as the RIS - SIMO virtual array by applying a Khatri-Rao property on the at least one signal, wherein after applying the Khatri-Rao property, the at least one signal is represented as:

$$y = \overrightarrow{(Y)} = \left(U_k(\theta) \odot U_M(\psi)\right)\alpha + n,$$

*where, y, n*$\in C^{MK*1}$, *$U_M \in C^{M*L} \wedge U_K \in C^{K*L}$*.

12. The system as claimed in claim 7, wherein the one or more hardware processors are configured to generate the one or more transformation matrices by computing a left transformation matrix and a right transformation matrix for $\theta$ and $\psi$, satisfying a criteria that the left transformation matrix is multiplied with a sub-array matrix and the right transformation matrix is multiplied with the sub-array matrix in order to separate the $\theta$ and $\psi$ as diagonal entries of associated diagonal matrices $\Lambda_\theta$, $\Lambda_\psi$.

13. One or more non-transitory machine-readable information storage mediums comprising one or more instructions which when executed by one or more hardware processors cause:

receiving at least one signal transmitted from a single-antenna transmitter at a multi-antenna receiver through a reconfigurable intelligent surface (RIS) over a time window;
generating a signal matrix Y by stacking a plurality of observation vectors of the at least one signal at the multi-antenna receiver, over the time window;
vectorizing the signal matrix by jointly visualizing a plurality of RIS elements and a plurality of multi-antenna receiver array elements as a RIS - Single Input Multiple Output (SIMO) virtual array;
constructing a data matrix $Y_E$, by creating each of a plurality of columns of $Y_E$ by selecting a plurality of sub-array elements of the signal matrix, wherein each column of $Y_E$ is created by sliding a window sequentially in horizontal and vertical directions, wherein in the data matrix $Y_E$, the plurality of RIS elements are represented in a first dimension and the plurality of the multi-antenna receiver array elements are represented in a second dimension;
generating a covariance matrix of the data matrix $Y_E$ by using the data matrix $Y_E$ and associated Hermitian matrix, where Hermitian matrix is a conjugate and transpose of data matrix $Y_E$;
determining a column space $U_s$ of the covariance matrix by performing a singular value decomposition of the covariance matrix;
computing a plurality of eigen vectors of a full rank transformation matrix using one or more transformation matrices and the column space $U_s$;

generating the full rank transformation matrix using the computed eigen vectors; and

obtaining values of an angle $\psi$ and an angle $\theta$ jointly using the full rank transformation matrix, wherein the $\psi$ and $\theta$ represent an angle pair.

**14.** The one or more non-transitory machine-readable information storage mediums as claimed in claim 13, wherein the angle pair is used to estimate a path gain ($\alpha$) for channel estimation of a channel between the single-antenna transmitter and the multi-antenna receiver.

**15.** The one or more non-transitory machine-readable information storage mediums as claimed in claim 13, wherein the received at least one signal is represented as:

$$y_k = (F.diag(w_k).g)x_k + n_k$$

where, $y_k$ is an observation vector in the time window, F represents channel between RIS- multi-antenna receiver, g represents channel between single-antenna transmitter RIS, $diag(w_k)$ is a reflection coefficient of the RIS, $x_k$ is a pilot for the time window, and $n_k$ is a gaussian noise.

Reconfigurable Intelligent Surface (RIS)
(N elements)

$F$

RIS-BS Channel

$g$

UE-RIS Channel

Single-antenna
transmitter

Multi-antenna
receiver

FIG. 1A

100

108

MEMORY 104

MODULES 106

REPOSITORY 110

I/O INTERFACE 112

HARDWARE PROCESSORS 102

FIG. 1B

receiving, via one or more hardware processors, at least one signal transmitted from a single-antenna transmitter at a multi-antenna receiver through a reconfigurable intelligent surface (RIS) over a time window ⟶ 202

generating, via the one or more hardware processors, a signal matrix Y by stacking a plurality of observation vectors of the at least one signal at the multi-antenna receiver, over the time window ⟶ 204

vectorizing, via the one or more hardware processors, the signal matrix by jointly visualizing a plurality of RIS elements and a plurality of multi-antenna receiver array elements as a RIS – Single Input Multiple Output (SIMO) virtual array ⟶ 206

constructing, via the one or more hardware processors, a data matrix Y_E , by creating each of a plurality of columns of Y_E by selecting a plurality of sub-array elements of the signal matrix, wherein each column of Y_E is created by sliding a window sequentially in horizontal and vertical directions, wherein in the data matrix Y_E, the plurality of RIS elements are represented in a first dimension and the plurality of the multi-antenna receiver array elements are represented in a second dimension ⟶ 208

A

200

FIG. 2A

A

generating, via the one or more hardware processors, a
covariance matrix of the data matrix Y_E by using the data
matrix Y_E and associated Hermitian matrix, where
Hermitian matrix is a conjugate and transpose of data matrix
Y_E

$210$

determining, via the one or more hardware processors, a
column space Us of the covariance matrix by performing a
singular value decomposition of the covariance matrix

$212$

computing, via the one or more hardware processors, a
plurality of eigen vectors of a full rank transformation matrix
using one or more transformation matrices and the column
space Us

$214$

generating, via the one or more hardware processors, the full
rank transformation matrix using the computed eigen vectors

$216$

obtaining, via the one or more hardware processors, values of
an angle $\psi$ and an angle $\theta$ jointly using the full rank
transformation matrix, wherein the $\psi$ and $\theta$ represent an angle
pair

$218$

200

FIG. 2B

FIG. 3A

FIG. 3B

FIG. 3C

FIG. 3D

FIG. 3E

Number of pilots $K$

FIG. 3F

Europäisches
Patentamt

European
Patent Office

Office européen
des brevets

**DECLARATION**

which under Rule 63 of the European Patent Convention shall be considered, for the purposes of subsequent proceedings, as the European search report

**Application Number**

EP 25 16 3554

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

                                           INV.
H04B7/04
H04B7/06
H04L25/02

1        The subject-matter of claims 1-15 is not sufficiently disclosed to be carried out by the skilled person violating Article 83 EPC and can therefore also not be reasonable searched.

2        The applicant was invited under Rule 63 EPC to file a statement explaining the subject-matter to be searched in terms of a technical explanation of how the claims can be implemented and from which parts of the application such implementation can be derived. However, the reply did not overcome all of the substantive objections, meaning that a reasonable search is still not possible. Therefore no search will be performed under Rule 63 EPC.

3    The specific reasons as to why the claimed subject-matter cannot be reasonably searched are:

3.1    Claim 1 defines to generate a matrix by "stacking" a plurality of vectors. However, "stacking" of vectors is not a commonly known mathematical term. Therefore the skilled person does not know how to generate the matrix. Thus the skilled person cannot determine the matrix Y in the claimed manner based on the explanation in the description. Claim 1 therefore violates Article 83 EPC.

The representative argued that this term describe a well known concept in the vector space for generating a matrix. As "proof" they provided an internet link to a question in a forum on "How to stack vectors to make a matrix". However, such forum contributions are neither scientific literature nor can they be considered proof of common general knowledge.

                                            -/--

| Place of search | Date | Examiner |
|---|---|---|
| Munich | 10 November 2025 | Neeb, Christoph |

EPO FORM 1504 (P04F37)

page 1 of 4

Europäisches
Patentamt

European
Patent Office

Office européen
des brevets

**DECLARATION**

which under Rule 63 of the European Patent Convention
shall be considered, for the purposes of subsequent
proceedings, as the European search report

**Application Number**

EP 25 16 3554

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

Therefore the explanation does not overcome the objection.

3.2    Furthermore, the matrix Y is defined using a term UKH, which in turn is defined as a product of itself with another matrix W, which does not makes technical sense and renders even the definition of Y unclear.

The representative argues that this would be a typographical error providing a corrected definition. However, as the correction is nowhere to be found in the application as filed, it cannot be considered to clarify the scope of claim 1.

Therefore this issue cannot be overcome by the reply of the representative and the objection is maintained.

Furthermore, as it appears that this issue cannot be overcome at all, a technically meaningful search cannot be carried out for this reason alone

3.3        Claim 1 further defines to vectorize the matrix by "jointly visualizing" a plurality of RIS and receiver array elements as a single array. Again, this is not a known mathematical procedure, rendering the skilled person unable to implement the step.

When looking in to the description, the skilled person would find on page 16 a definition of the vectorization which does, however, not disclose how the matrix Y is related to the vectorization. Thus the skilled person cannot determine the claimed vectorization based on the explanation in the description either.

Claim 1 therefore violates Article 83 EPC.

The representative argues that an example

-/--

EPO FORM 1504 (P04F37)

| Place of search | Date | Examiner |
|---|---|---|
| Munich | 10 November 2025 | Neeb, Christoph |

page 2 of 4

Europäisches
Patentamt

European
Patent Office

Office européen
des brevets

**DECLARATION**

**Application Number**

which under Rule 63 of the European Patent Convention
shall be considered, for the purposes of subsequent
proceedings, as the European search report

EP 25 16 3554

| The Search Division considers that the present application, does not comply with the provisions of the EPC to such an extent that it is not possible to carry out a meaningful search into the state of the art on the basis of all claims | **CLASSIFICATION OF THE APPLICATION (IPC)** |
|---|---|

Reason:

of the joint visualization merely means processing together, based on paragraph 45. However, this paragraph provides a very specific disclosure of a signal matrix using a Khatri-Rao property to vectorize the signals. Therefore this is not a general teaching of "processing together" all of the elements.
Furthermore, the formulas in this and the following paragraphs are not even completely defined, i.e. it is unclear how to select the individual elements used to vectorize the matrix y in the embodiment..
4        The same reasoning applies to the corresponding independent claims 7 and 13, which therefore also violate Article 83 EPC
5        Also, the dependent claims do not serve to overcome any of the objections above.
6        In consequence, although some steps could be interpreted using the narrow definitions of the description, many other steps of the independent claims are not sufficiently disclosed to be implemented at all.
As taking the partially disclosed subset of steps - which even when taken in combination would not lead to any particular technical results -  out of a method of interrelated operations would serve no technical purpose, a reasonable search even of a part of the claimed subject-matter is not possible.

The applicant's attention is drawn to the fact that a search may be carried out during examination following a declaration of no search under Rule 63 EPC, should the

-/--

| Place of search | Date | Examiner |
|---|---|---|
| Munich | 10 November 2025 | Neeb, Christoph |

EPO FORM 1504 (P04F37)

page 3 of 4

Europäisches
Patentamt

European
Patent Office

Office européen
des brevets

# DECLARATION

**Application Number**

which under Rule 63 of the European Patent Convention
shall be considered, for the purposes of subsequent
proceedings, as the European search report

**EP 25 16 3554**

| | CLASSIFICATION OF THE APPLICATION (IPC) |
|---|---|
| The Search Division considers that the present application, does not comply with the provisions of the EPC to such an extent that it is not possible to carry out a meaningful search into the state of the art on the basis of all claims<br><br>Reason:<br><br>problems which led to the declaration being issued be overcome (see EPC Guideline C-IV, 7.3). | |
| **Place of search** Munich | | **Date** 10 November 2025 | | **Examiner** Neeb, Christoph |

EPO FORM 1504 (P04F37)

page 4 of 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421019098